## Europäisches Patentamt
## European Patent Office
## Office européen des brevets

(11) Veröffentlichungsnummer: **0 259 501**
**A1**

(12) # EUROPÄISCHE PATENTANMELDUNG
Veröffentlicht nach Art. 158 Abs. 3 EPÜ

(21) Anmeldenummer: 87902019.6

(22) Anmeldetag: 20.11.86

Daten der zugrundeliegenden internationalen Anmeldung:

(86) Internationale Anmeldenummer:
PCT/SU86/00117

(87) Internationale Veröffentlichungsnummer:
WO87/05392 (11.09.87 87/20)

(51) Int.Cl.³: **G 01 N 29/04**

(30) Priorität: 06.03.86 SU 4052258

(43) Veröffentlichungstag der Anmeldung:
16.03.88 Patentblatt 88/11

(84) Benannte Vertragsstaaten:
BE CH DE FR GB IT LI SE

(71) Anmelder: VSESOJUZNY
NAUCHNO-ISSLEDOVATELSKY I PROEKTNY INSTITUT
ALJUMINIEVOI, MAGNIEVOI I ELEKTRODNOI
PROMYSHLENNOSTI
Sredny pr.86
Leningrad, 199026(SU)

(71) Anmelder: NAUCHNO-PROIZVODSTVENNOE
OBIEDINENIE PO ABRAZIVAM I SHLIFOVANIJU
ul.Beloostrovskaya, 17
Leningrad, 197342(SU)

(72) Erfinder: GREBENKIN, Anatoly Filippovich
Lermontovsky pr., 8-75
Leningrad, 190008(SU)

(72) Erfinder: GLAGOVSKY, Boris Aronovich
pr. Morisa Toreza, 15-49
Leningrad, 194021(SU)

(72) Erfinder: MOSKOVENKO, Igor Borisovich
Kirovsky pr., 50-6
Leningrad, 197022(SU)

(72) Erfinder: LASUKOVA, Ljudmila Petrovna
ul. Ushinskogo, 39-3-199
Leningrad, 195267(SU)

(74) Vertreter: Ebbinghaus, Dieter et al,
v. FÜNER, EBBINGHAUS, FINCK Postfach 95 01 60
D-8000 München 95(DE)

(54) verfahren zur zerstoerungsfreien guetekontrolle von kohlenstofferzeugnissen.

(57) Verfahren zur zerstörungsfreien Gütekontrolle von Kohlenstofferzeugnissen, bei dem in jedem Kohlenstofferzeugnis 3 einer Gruppe von Kohlenstofferzeugnissen und in einem wenigstens aus einem Kohlenstofferzeugnis 3 ausgeschnittenen Probekörper die Ausbreitungsgeschwindigkeit der erregten akustischen Schwingungen bestimmt wird. Dann werden Kohlenstofferzeugnisse 3 mit minimaler und maximaler Ausbreitungsgeschwindigkeit der

./...

akustischen Schwingungen ausgewählt, in denen man eine Zahl n von Probekörpern nach der Längsachse und eine Zahl m von Probekörpern längs der Querachse dieser Erzeugnisse ausschneidet. In den gewählten Kohlenstofferzeugnissen 3 werden mit Mittelwerte der Ausbreitungsgeschwindigkeit der akustischen Schwingungen und des spezifischen elektrischen Widerstandes den Ausdrücken

$$\overline{C_e} = \frac{1}{n+m} \sum_{1}^{n+m} C_e \quad \text{und} \quad \overline{\rho} = \frac{1}{n+m} \sum_{1}^{n+m} \rho$$

gefunden. Man konstruiert grafisch die lineare Korrelationsabhängigkeit zwischen diesen Werten, nach welcher man das Intervall von Werten des spezifischen elektrischen Widerstandes ermittelt und auf Grund dieses Intervalls das Intervall der Ausbreitungsgeschwindigkeit der akustischen Schwingungen von Kohlenstofferzeugnissen 3 bestimmt. Nach dem letzteren beurteilt man die Qualität der Kohlenstofferzeugnisse 3, und nach diesem Intervall werden die Kohlenstofferzeugnisse 3 ausgesondert.

# VERFAHREN ZUR ZERSTÖRUNGSFREIEN GÜTEKONTROLLE VON KOHLENSTOFFERZEUGNISSEN

## Anwendungsgebiet

Die Erfindung bezieht sich auf Verfahren zur Gütekontrolle von Kohlenstofferzeugnissen, insbesondere auf Verfahren zur zerstörungsfreien Gütekontrolle von Kohlenstofferzeugnissen.

## Stand der Technik

Es ist ein Verfahren zur zerstörungsfreien Gütekontrolle von Kohlenstofferzeugnissen bekannt (vgl. z.B. "Geophysikalische Verfahren zur Untersuchung von Erdöl- und Erdgasbohrungen", Redaktion von L.I.Pomeranz, Moskau, Verlag "Nedra", 1981, S. 32-43, 160-186), bei dem in jedem Kohlenstofferzeugnis einer Gruppe von Kohlenstofferzeugnissen und in einem wenigstens aus einem Kohlenstofferzeugnis ausgeschnittenen Probekörper akustische Schwingungen erregt werden und die akustischen Schwingungen in jedem Kohlenstofferzeugnis und im Probekörper in ein elektrisches Signal umgewandelt werden, dessen Frequenz der Frequenz dieser akustischen Schwingungen entspricht, wobei die Frequenz des elektrischen Signals zwecks Bestimmung der Frequenz der akustischen Schwingungen im Probekörper und in dem diesem entsprechenden Kohlenstofferzeugnis gemessen wird, die Ausbreitungsgeschwindigkeit der akustischen Schwingungen in jedem Kohlenstofferzeugnis bestimmt wird, der spezifische elektrische Widerstand der Kohlenstofferzeugnisse ermittelt wird, die Abhängigkeit zwischen der Ausbreitungsgeschwindigkeit der akustischen Schwingungen im Kohlenstofferzeugnis und seinem spezifischen elektrischen Widerstand gefunden wird, das Intervall der Ausbreitungsgeschwindigkeit der akustischen Schwingungen nach dem Intervall der vorgegebenen Werte des spezifischen elektrischen Widerstandes bewertet wird und Kohlenstofferzeugnisse im Intervall der Ausbreitungsgeschwindigkeit der akustischen Schwingungen ausgesondert werden, nach dem man die Qualität der Kohlenstofferzeugnisse beurteilt.

Bei diesem Verfahren wird der spezifische elektrische Widerstand der Kohlenstofferzeugnisse an einer Anzahl von Kohlenstofferzeugnissen bestimmt, die der Anzahl der Kohlenstofferzeugnisse in der ganzen Partie nahe liegt, während die Abhängigkeit zwischen der Ausbreitungsgeschwindigkeit der Schallwellen im Kohlenstofferzeugnis und seinem spezifischen elektrischen Widerstand bei jedem Kohlenstofferzeugnis der Partie ermittelt wird.

Die bei diesem Verfahren erforderliche Messung des spezifischen elektrischen Widerstandes jedes Kohlenstofferzeugnisses und die darauf folgende Ermittlung der Abhängigkeit zwischen der Ausbreitungsgeschwindigkeit der Schallschwingungen im Kohlenstofferzeugnis und seinem spezifischen elektrischen Widerstand führen jedoch zur Verlangsamung der Gütekontrolle von Kohlenstofferzeugnissen und zu höherem Arbeitsaufwand bei der Kontrolle.

Offenbarung der Erfindung

Der Erfindung liegt die Aufgabe zugrunde, ein Verfahren zur zerstörungsfreien Gütekontrolle von Kohlenstofferzeugnissen zu entwickeln, bei dem die Ermittlung der Ausbreitungsgeschwindigkeit der akustischen Schwingungen, des spezifischen elektrischen Widerstandes in den Kohlenstofferzeugnissen sowie der Abhängigkeit zwischen ihnen so vorgenommen wird, dass die Gütekontrolle der Kohlenstofferzeugnisse schneller, genauer und mit niedrigerem Arbeitsaufwand durchgeführt wird.

Dies wird dadurch erreicht, dass beim Verfahren zur zerstörungsfreien Gütekontrolle von Kohlenstofferzeugnissen, bei dem in jedem Kohlenstofferzeugnis einer Gruppe von Kohlenstofferzeugnissen und in einem wenigstens aus einem Kohlenstofferzeugnis ausgeschnittenen Probekörper akustische Schwingungen erregt werden und die akustischen Schwingungen in jedem Kohlenstofferzeugnis und im Probekörper in ein elektrisches Signal umgewandelt werden, dessen Frequenz der Frequenz dieser akustischen Schwingungen entspricht, wobei die Frequenz des elektrischen Signals zwecks Bestimmung der Frequenz der akustischen Schwingungen im Kohlenstofferzeugnis und im Probekörper gemessen wird, die Ausbreitungsgeschwindigkeit der akustischen Schwingungen im Probekörper und in dem diesem entsprechenden Kohlenstofferzeugnis bestimmt wird, die Ausbreitungsgeschwindigkeit der akustischen Schwingungen in jedem Kohlenstofferzeugnis ermittelt wird, der spezifische elektrische Widerstand der Kohlenstofferzeugnisse bestimmt wird, die Abhängigkeit zwischen der Ausbreitungsgeschwindigkeit der akustischen Schwingungen im Kohlenstofferzeugnis und seinem spezifischen elektrischen Widerstand gefunden wird, das Intervall der Ausbreitungsgeschwindigkeit der akustischen Schwingungen nach dem Intervall der vorgegebenen Werte des spezifischen elektrischen Widerstandes bewertet wird und Kohlenstofferzeugnisse der Gruppe im Intervall der Ausbreitungsgeschwindigkeit der akustischen Schwingungen ausgesondert werden, nach dem man die Qualität der Kohlenstofferzeugnisse bewertet, - nach der Bestimmung der Ausbreitungsgeschwindigkeit der akustischen Schwingungen in jedem Kohlenstofferzeugnis erfindungsgemäss aus der Gruppe der Kohlenstofferzeugnisse wenigstens ein Kohlenstofferzeugnis mit minimaler Ausbreitungsgeschwindigkeit der akustischen Schwingungen und mindestens ein Kohlenstofferzeugnis mit maximaler Ausbreitungsgeschwindigkeit der akustischen Schwingungen in diesen Erzeugnissen gewählt werden und dann aus jedem gewählten Kohlenstofferzeugnis eine Zahl $n$ von Probekörpern nach seiner Längsachse und eine Zahl $m$ von Probekörpern längs seiner Querachse ausgeschnitten werden, in jedem der $n$ und $m$ Probekörper akustische Schwingungen erregt werden, diese akustischen Schwingungen in jedem von $n$ und $m$ Probekörpern in ein elektrisches Signal umgewandelt werden, dessen Frequenz der Frequenz dieser akustischen Schwingungen entspricht, die Frequenz des elektrischen Signals zwecks Bestimmung der Frequenz der akustischen Schwingungen jedes der n und m Probekörper gemessen wird, folgerichtig die Ausbreitungsgeschwindigkeit der akustischen Schwingungen und der spezifische elektrische Widerstand jedes der n und m Probekörper ermittelt werden, die Ausbreitungsgeschwindigkeit der akustischen Schwingungen in den gewählten Kohlenstofferzeugnissen durch Auffinden ihres gemittelten Wertes aus dem Ausdruck

$$\overline{C}_e = \frac{1}{n+m} \sum_1^{n+m} C_e$$

bestimmt wird, in dem $C_e$ die Ausbreitungsgeschwindigkeit der akustischen Schwingungen ist, wobei die Bestimmung des spezifischen elektrischen Widerstandes der Kohlenstofferzeugnisse in der Gruppe, deren Zahl durch die Anzahl der gewählten Kohlenstofferzeugnisse gegeben ist, durch Bestimmung seines Mittelwertes aus dem Ausdruck

$$\overline{\rho} = \frac{1}{n+m} \sum_1^{n+m} \rho$$

durchgeführt wird, in dem $\rho$ der spezifische elektrische Widerstand ist, während die Ermittlung der Abhängigkeit zwischen der Ausbreitungsgeschwindigkeit der akustischen Schwingungen im Kohlenstofferzeugnis und seinem spezifischen elektrischen Widerstand durch Auffinden der linearen Korrelationsabhängigkeit zwischen dem Mittelwert der Ausbreitungsgeschwindigkeit der akustischen Schwingungen in den gewählten Kohlenstofferzeugnissen und dem Mittelwert ihres spezifischen elektrischen Widerstandes vorgenommen wird.

Die Erfindung ermöglicht die Messung des spezifischen elektrischen Widerstandes an einer bedeutend kleineren Zahl von Kohlenstofferzeugnissen, was zur schnelleren Durchführung der Gütekontrolle und zur Senkung des

- 5 -

Arbeitsaufwandes bei der Kontrolle führt.

Ausserdem gibt die Erfindung die Möglichkeit, die Ungleichmässigkeit bei der Bestimmung des spezifischen elektrischen Widerstandes im ganzen Kohlenstofferzeugnis auszuschliessen und dadurch die Genauigkeit seiner Gütekontrolle zu erhöhen.

Kurzbeschreibung der Erfindung

Die Erfindung wird in der nachstehenden Beschreibung der Beispiele ihrer konkreten Ausführung und anhand der beigefügten Zeichnungen näher erläutert. Dabei zeigen

Fig. 1 ein Funktionsschema der zur zerstörungsfreien Gütekontrolle bestimmten Einrichtung, die das angemeldete Verfahren realisiert;

Fig. 2 ein Funktionsschema einer anderen Variante der zur zerstörungsfreien Gütekontrolle von Kohlenstofferzeugnissen verwendeten Einrichtung, die das angemeldete Verfahren für Erzeugnisse grosser Länge realisiert;

Fig. 3 ein Diagramm der Korrelationsabhängigkeit des spezifischen elektrischen Widerstandes der Kohlenstofferzeugnisse von der Ausbreitungsgeschwindigkeit der akustischen Schwingungen in diesen Erzeugnissen beim Verfahren zur zerstörungsfreien Gütekontrolle von Kohlenstofferzeugnissen gemäss der Erfindung.

Bevorzugte Ausführungsform der Erfindung

Das Verfahren zur zerstörungsfreien Gütekontrolle von Kohlenstofferzeugnissen besteht darin, dass man in jedem Kohlenstofferzeugnis einer Gruppe von Kohlenstofferzeugnissen und in einem wenigstens aus einem Kohlenstofferzeugnis ausgeschnittenen Probekörper akustische Schwingungen erregt, die akustischen Schwingungen in jedem Kohlenstofferzeugnis und im Probekörper in ein elektrisches Signal umwandelt, dessen Frequenz der Frequenz dieser akustischen Schwingungen entspricht, wobei die Frequenz des elektrischen Signals zur Bestimmung der

- 6 -

Frequenz der akustischen Schwingungen im Kohlenstofferzeugnis und im Probekörper gemessen wird, die Ausbreitungsgeschwindigkeit der akustischen Schwingungen im Probekörper und in dem diesem entsprechenden Kohlenstofferzeugnis bestimmt wird. Dann findet· man den Formfaktor der Kohlenstofferzeugnisse und bestimmt man die Ausbreitungsgeschwindigkeit der akustischen Schwingungen in jedem Kohlenstofferzeugnis. Darauf wählt man aus der Gruppe von Kohlenstofferzeugnissen wenigstens ein Kohlenstofferzeugnis mit minimaler und mindestens ein Kohlenstofferzeugnis mit maximaler Ausbreitungsgeschwindigkeit der akustischen Schwingungen in diesen Erzeugnissen, worauf man aus jedem gewählten Kohlenstofferzeugnis eine Zahl $n$ von Probekörpern nach seiner Längsachse und eine Zahl $m$ von Probekörpern längs seiner Querachse ausschneidet und in jedem der $n$ und $m$ Probekörper akustische Schwingungen erzeugt. Dann werden die akustischen Schwingungen in jedem von $n$ und $m$ Probekörpern in ein elektrisches Signal umgewandelt, dessen Frequenz der Frequenz dieser akustischen Schwingungen entspricht, die Frequenz des elektrischen Signals wird zwecks Bestimmung der Frequenz der akustischen Schwingungen jedes der $n$ und $m$ Probekörper gemessen und folgerichtig wird die Ausbreitungsgeschwindigkeit der akustischen Schwingungen sowie der spezifische elektrische Widerstand jedes der $n$ und $m$ Probekörper ermittelt. Darauf findet man den Mittelwert der Ausbreitungsgeschwindigkeit der akustischen Schwingungen in den gewählten Kohlenstofferzeugnissen aus dem Ausdruck

$$\overline{C}_e = \frac{1}{n + m} \sum_1^{n+m} C_e \, ,$$

in dem $C_e$ die Ausbreitungsgeschwindigkeit der akustischen Schwingungen bedeutet, worauf man die Ausbreitungsgeschwindigkeit der akustischen Schwingungen in jedem Kohlenstofferzeugnis bestimmt. Dann erhält man den Mittelwert des spezifischen elektrischen Widerstandes der gewählten Kohlenstofferzeugnisse aus dem Ausdruck

$$\bar{\rho} = \frac{1}{n + m} \sum_{1}^{n+m} \rho \, ,$$

in dem $\rho$ der spezifische elektrische Widerstand ist. Man findet die lineare Korrelationsabhängigkeit zwischen dem Mittelwert der Ausbreitungsgeschwindigkeit der akustischen Schwingungen in den gewählten Kohlenstofferzeugnissen und dem Mittelwert ihres spezifischen elektrischen Widerstandes und bestimmt das Intervall der Ausbreitungsgeschwindigkeit der akustischen Schwingungen nach dem Intervall der Werte des spezifischen elektrischen Widerstandes, worauf man die Kohlenstofferzeugnisse im Intervall der Ausbreitungsgeschwindigkeit der akustischen Schwingungen aussondert, nach dem man die Qualität der Kohlenstofferzeugnisse beurteilt.

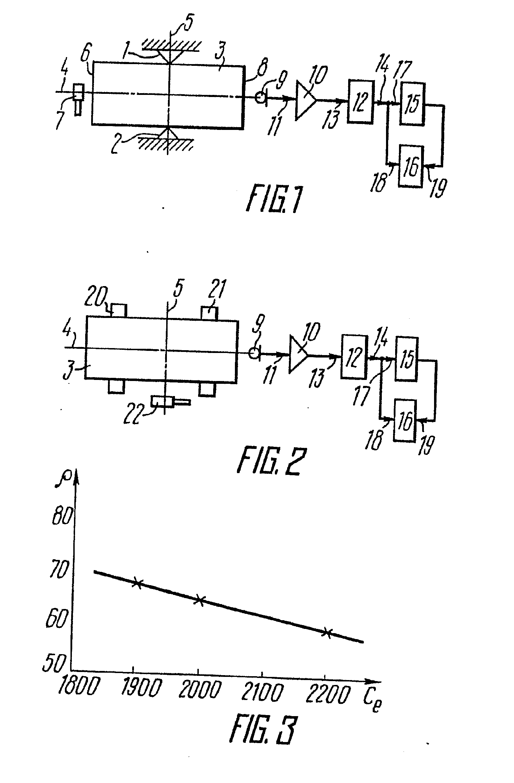

Die Realisierung des zum Patent angemeldeten Verfahrens zur zerstörungsfreien Gütekontrolle von Kohlenstofferzeugnissen erfolgt mit Hilfe der bekannten Einrichtung zur Gütekontrolle der Kohlenstofferzeugnisse (vgl. z.B. A.A. Botaki, V.L. Ulyanov, A.V. Sharko "Ultraschallkontrolle der Festigkeitswerte von Konstruktionswerkstoffen", Moskau, Verlag "Mashinostrojenie", 1983, S. 35, 36). Diese Einrichtung enthält gleichachsig angeordnete Stützen 1 (Fig. 1), 2, auf denen das zu prüfende Erzeugnis 3 so aufgestellt wird, dass seine Längsachse 4 senkrecht auf den Achsen der Stützen 1, 2 steht und seine Querachse 5 durch die Stützen 1, 2 hindurchgeht. Neben der Stirnseite 6 des Erzeugnisses 3 ist ein Mittel 7 zur Erregung akustischer Schwingungen angeordnet ( im folgenden Schlägel 7 genannt), während an seiner anderen Stirnseite 8 ein schallelektrischer Wandler 9 befestigt ist, der die akustischen Schwingungen in ein elektrisches Signal umwandelt. An den Wandler 9 ist ein Begrenzungsverstärker 10 mit seinem Eingang 11 angeschlossen.

An den Begrenzungsverstärker 10 ist ein Filter 12 mit seinem Eingang 13 angeschaltet. Am Ausgang 14 des Filters 12 liegen ein Sinchronisiergerät 15 und ein Frequenzmesser 16 mit ihren Eingängen 17 bzw. 18. Der Eingang 19 des Frequenzmessers 16 ist mit dem Synchronisiergerät 15 verbunden. Als schallelektrischer Wandler 9 wird ein weitgehend bekanntes elektrodynamisches Mikrofon 9 benutzt (vgl. z.B. B.A. Glagovski, I.B. Moskovenko "Niederfrequente akustische Prüfungsverfahren im Maschinenbau", Leningrad, Verlag "Mashinostrojenie", 1977, S. 153), und als Frequenzmesser 16 dient ein elektronischer Zählfrequenzmesser 16 (vgl. z.B. B.A. Glagovski, I.B. Moskovenko "Niederfrequente akustische Prüfungsverfahren im Maschinenbau", Leningrad, Verlag "Mashinostroenie", 1977, S. 153 ).

Eine andere Variante der beschriebenen bekannten Einrichtung zur zerstörungsfreien Gütekontrolle von Kohlenstofferzeugnissen, die zur Realisierung des zum Patent angemeldeten Verfahrens für Erzeugnisse grosser Länge benutzt wird, enthält Stützen 20 (Fig. 2), 21, die hintereinander vor dem schallelektrischen Wandler 9 längs der Querachse 5 des Erzeugnisses 3 angeordnet sind. Das Mittel zur Erregung akustischer Schwingungen - der Schlägel 22 - befindet sich zwischen den Stützen 20 und 21 im gleichen Abstand von diesen. Im übrigen ist der Aufbau der Einrichtung ähnlich der beschriebenen Ausführung.

Diese weitgehend bekannte Einrichtung zur zerstörungsfreien Gütekontrolle von Kohlenstofferzeugnissen funktioniert wie folgt.

Nach einem Schlag mit dem Schlägel 7 (Fig. 1) auf die Stirnseite 6 des Kohlenstofferzeugnisses 3 entstehen in diesem akustische Schwingungen, die vom elektrodynamischen Mikrofon 9 empfangen werden. Das Mikrofon 9 wandelt die akustischen Schwingungen in ein elektrisches Signal um, welches dem Eingang 11 des Begrenzungsverstär-

- 9 -

kers 10 zugeführt wird. Nach Begrenzung und Verstärkung im Verstärker 10 gelangt das elektrische Signal zum Eingang 13 des Filters 12. Das Filter 12 eliminiert die Dauer des Übergangsvorganges, verhindert die Beeinflussung der weiteren Messung der Frequenz des vom Mikrofon 9 gelieferten elektrischen Signals durch Fremdgeräusche und löst aus diesem Signal die Frequenz heraus, die der Frequenz der akustischen Schwingungen im Erzeugnis 3 entspricht. Vom Ausgang 14 des Filters 12 wird das Signal mit dieser Frequenz auf den Eingang 17 des Synchronisiergeräts 15 und auf den Eingang 18 des elektronischen Zählfrequenzmessers 16 gegeben. Das Synchronisiergerät 15 erzeugt einen Auslöseimpuls, der auf den Eingang 19 des Frequenzmessers 16 geführt wird, wobei der Frequenzmesser 16 die Frequenz der akustischen Schwingungen im Erzeugnis 3 misst. Der vom Frequenzmesser 16 gemessene Frequenzwert ist der Wert der Frequenz von akustischen Schwingungen im Erzeugnis 3. Jeder Wert der Frequenz von akustischen Schwingungen im Erzeugnis 3 bleibt an der Anzeigetafel des Frequenzmessers 16 angezeigt, bis ein neues Signal vom Mikrofon 9 empfangen wird.

Für Erzeugnisse grosser Länge ist die Erzeugung von akustischen Biegeschwingungen zweckmässig. Dabei versetzt der Schlägel 22 (Fig. 2) einen mechanischen Schlag auf die Seitenfläche des Erzeugnisses 3. Die dabei erregten akustischen Schwingungen breiten sich längs der Querachse 5 des Kohlenstofferzeugnisses 3 und werden vom Mikrofon 9 empfangen. Weiter arbeitet die Einrichtung wie oben beschrieben.

Konkretes Realisierungsbeispiel

Eine Partie von insgesamt 200 Kohlenstoff-Anodenblöcken wurde der Gütekontrolle unterzogen. Bei Messungen wurden Werte von $C_e$ in den Grenzen von 1900 bis 2200 m/s erhalten. Aus den Blöcken mit $C_{e\,min} = 1900$ m/s und $C_{e\,max} = 2200$ m/s wurden Probekörper mit Standardabmessungen (Zylinder mit 36 mm Durchmesser und 100 mm

länge) je drei Stück nach der Längsachse 4 und je drei Stück längs der Querachse 5 ausgeschnitten. Bei diesen Probekörpern wurde der spezifische elektrische Widerstand $\rho$ nach der weitgehend bekannten Methode gemessen. Bei den Probekörpern, die aus dem Erzeugnis 3 mit $C_{e\ min}$ = 1900 m/s ausgeschnitten wurden, ergaben sich dabei folgende Werte:

$$\rho_{1\ max} = 67{,}8\ \frac{Ohm\ mm^2}{m}\ ; \qquad \rho_{2\ max} = 67{,}6\ \frac{Ohm\ mm^2}{m}\ ;$$

$$\rho_{3\ max} = 68{,}2\ \frac{Ohm\ mm^2}{m}\ ; \qquad \rho_{4\ max} = 68{,}3\ \frac{Ohm\ mm^2}{m}\ ;$$

$$\rho_{5\ max} = 67{,}9\ \frac{Ohm\ mm^2}{m}\ ; \qquad \rho_{6\ max} = 68{,}5\ \frac{Ohm\ mm^2}{m}\ .$$

Daraus wurde der gemittelte Wert des spezifischen elektrischen Widerstandes $\rho$ für das Erzeugnis 3 mit $C_{e\ min}$ = 1900 m/s aus dem Ausdruck

$$\rho_{max} = \overline{\rho}_{max} = 1/6 \sum_{1}^{6} \rho_i = 68{,}05 \approx 68{,}1\ \frac{Ohm\ mm^2}{m}$$

berechnet.

Dann wurde die Frequenz der akustischen Schwingungen in jedem Probekörper gemessen und auf Grund der gemessenen Werte wurden die $C_e$ - Werte dieser Probekörper bestimmt:

$C_{e1\ min}$=1890 m/s; $C_{e2\ min}$=1930 m/s; $C_{e3\ min}$=1920 m/s;

$C_{e4\ min}$=1860 m/s; $C_{e5\ min}$=1880 m/s; $C_{e6\ min}$=1890 m/s.

Davon ausgehend ergab sich der Mittelwert der Ausbreitungsgeschwindigkeit der akustischen Schwingungen für das Erzeugnis 3 aus dem Ausdruck:

$$\overline{C}_{e\ min} = 1/6 \sum_{1}^{6} C_{ei} = 1895\ m/s \approx 1900\ m/s.$$

Ähnlicherweise erhielt man die Werte von $\overline{\rho}_{min}$ und $\overline{C}_{e\ max}$ für sechs Probekörper, die aus dem Erzeugnis 3 mit $C_{e\ max}$ = 2200 m/s ausgeschnitten wurden:

$$\bar{\rho}_{min} = 60,1 \frac{Ohm\cdot mm^2}{m} \ ,$$

$$\bar{C}_{e\ max} = 2210 \ m/s.$$

Auf Grund der erhaltenen Werte von $\bar{\rho}_{max}$, $\bar{C}_{e\ min}$ und $\bar{\rho}_{min}$, $\bar{C}_{e\ max}$ wurde das in Fig. 3 gezeigte Diagramm der Korrelationsabhängigkeit $\rho$ von $C_e$ gezeichnet, in dem auf der Abszissenachse $C_e$ in den Meßeinheiten m/s und auf der Ordinatenachse $\rho$ in (Ohm·mm²)/m aufgetragen sind. Aus diesem Diagramm wurden Grenzwerte von $C_e$ ermittelt, die den zulässigen Grenzwerten von $\rho$ entsprechen:

$$C_{e\ max} = 2200 \ m/s \quad bei \quad \rho_{min} = 60 \frac{Ohm\cdot mm^2}{m} \ ,$$

$$C_{e\ min} = 2000 \ m/s \quad bei \quad \rho_{max} = 65 \frac{Ohm\cdot mm^2}{m} \ .$$

Erzeugnisse mit $C_e > C_{e\ max}$ und $C_e < C_{e\ min}$ wurden als Ausschuß erkannt.

Erzeugnisse mit den $C_e$-Werten in den Grenzen $C_{e\ max} \geqq C_e \geqq C_{e\ min}$ wurden als Erzeugnisse ausgesondert, die den technischen Forderungen entsprechen.

Der Vorgang der Gütekontrolle der Erzeugnisse dauerte 2 Stunden, also zweimal so kurz wie die Gütekontrolle von Kohlenstofferzeugnissen nach dem bekannten Verfahren. Das zeugt von einer wesentlichen Verkürzung der Dauer der Gütekontrolle.

Die bei dem angemeldeten Verfahren erforderliche Konstruktion des Diagramms für die Abhängigkeit $\rho$ von $C_e$ vereinfacht außerdem die Auswertung der Meßergebnisse und senkt dadurch den Arbeitsaufwand.

Die Erfindung schließt die Möglichkeit der Übernahme von defekten Kohlenstofferzeugnissen in die Produktion aus.

Außerdem ermöglicht die Erfindung eine Erhöhung der Qualität von Kohlenstofferzeugnissen, setzt dadurch ihren Verbrauch beim Betrieb herab und erhöht ihre Betriebszuverlässigkeit.

Gewerbliche Anwendbarkeit

Die Erfindung kann bei der Produktion von Kohlenstofferzeugnissen benutzt werden, die z.B. bei elektrolytischer Herstellung von Aluminium und in anderen Zweigen der Buntmetall- und Eisenmetallindustrie sowie in der chemischen und Schleifmittelindustrie verwendet werden.

- 13 -

PATENTANSPRUCH

Verfahren zur zerstörungsfreien Gütekontrolle von Kohlenstofferzeugnissen, bei dem in jedem Kohlenstofferzeugnis einer Gruppe von Kohlenstofferzeugnissen und in einem wenigstens aus einem Kohlenstofferzeugnis ausgeschnittenen Probekörper akustische Schwingungen erregt werden und die akustischen Schwingungen in jedem Kohlenstofferzeugnis und im Probekörper in ein elektrisches Signal umgewandelt werden, dessen Frequenz der Frequenz dieser akustischen Schwingungen entspricht, wobei die Frequenz des elektrischen Signals zwecks Bestimmung der Frequenz der akustischen Schwingungen im Kohlenstofferzeugnis und im Probekörper gemessen wird, die Ausbreitungsgeschwindigkeit der akustischen Schwingungen im Probekörper und in dem diesem entsprechenden Kohlenstofferzeugnis bestimmt wird, die Ausbreitungsgeschwindigkeit der akustischen Schwingungen in jedem Kohlenstofferzeugnis ermittelt wird, der spezifische elektrische Widerstand der Kohlenstofferzeugnisse bestimmt wird, die Abhängigkeit zwischen der Ausbreitungsgeschwindigkeit der akustischen Schwingungen im Kohlenstofferzeugnis und seinem spezifischen elektrischen Widerstand gefunden wird, das Intervall der Ausbreitungsgeschwindigkeit der akustischen Schwingungen nach dem Intervall der vorgegebenen Werte des spezifischen elektrischen Widerstandes bewertet wird und Kohlenstofferzeugnisse der Gruppe im Intervall der Ausbreitungsgeschwindigkeit der akustischen Schwingungen ausgesondert werden, nach dem man die Qualität der Kohlenstofferzeugnisse bewertet, dadurch   g e k e n n z e i c h n e t, daß nach der Bestimmung der Ausbreitungsgeschwindigkeit der akustischen Schwingungen in jedem Kohlenstofferzeugnis (3) aus der Gruppe der Kohlenstofferzeugnisse wenigstens ein Kohlenstofferzeugnis mit minimaler Ausbreitungsgeschwindigkeit der akustischen Schwingungen und mindestens ein Kohlenstofferzeugnis (3) mit maximaler Ausbreitungsgeschwindig-

- 14 -

keit der akustischen Schwingungen in diesen Erzeugnissen gewählt werden und dann aus jedem gewählten Kohlenstofferzeugnis (3) eine Zahl n von Probekörpern nach seiner Längsachse und eine Zahl m von Probekörpern längs seiner Querachse ausgeschnitten werden, in jedem der n und m Probekörper akustische Schwingungen erregt werden, diese akustischen Schwingungen in jedem von n und m Probekörpern in ein elektrisches Signal umgewandelt werden, dessen Frequenz der Frequenz dieser akustischen Schwingungen entspricht, die Frequenz des elektrischen Signals zwecks Bestimmung der Frequenz der akustischen Schwingungen jedes der n und m Probekörper gemessen wird, folgerichtig die Ausbreitungsgeschwindigkeit der akustischen Schwingungen und der spezifische elektrische Widerstand jedes der n und m Probekörper ermittelt werden, die Ausbreitungsgeschwindigkeit der akustischen Schwingungen in den gewählten Kohlenstofferzeugnissen (3) durch Auffinden ihres gemittelten Wertes aus dem Ausdruck

$$\overline{C}_e = \frac{1}{n + m} \sum_{1}^{n+m} C_e$$

bestimmt wird, in dem $C_e$ die Ausbreitungsgeschwindigkeit der akustischen Schwingungen ist, wobei die Bestimmung des spezifischen elektrischen Widerstandes der Kohlenstofferzeugnisse in der Gruppe, deren Zahl durch die Anzahl der gewählten Kohlenstofferzeugnisse gegeben ist, durch Bestimmung seines Mittelwertes aus dem Ausdruck

$$\overline{\rho} = \frac{1}{n + m} \sum_{1}^{n+m} \rho$$

durchgeführt wird, in dem $\rho$ der spezifische elektrische Widerstand ist, während die Ermittlung der Abhängigkeit zwischen der Ausbreitungsgeschwindigkeit der akustischen Schwingungen im Kohlenstofferzeugnis (3) und seinem spezifischen elektrischen Widerstand durch Auffinden der

0259501

linearen Korrelationsabhängigkeit zwischen dem Mittelwert der Ausbreitungsgeschwindigkeit der akustischen Schwingungen in den gewählten Kohlenstofferzeugnissen (3) und dem Mittelwert ihres spezifischen elektrischen Widerstandes vorgenommen wird.

0259501

1/1

FIG.1

FIG.2

FIG.3

# INTERNATIONAL SEARCH REPORT

International Application No PCT/SU 86/00117

## I. CLASSIFICATION OF SUBJECT MATTER (if several classification symbols apply, indicate all)

According to International Patent Classification (IPC) or to both National Classification and IPC

IPC $^4$: G 01 N 29/04

## II. FIELDS SEARCHED

### Minimum Documentation Searched [7]

| Classification System | Classification Symbols |
|---|---|
| IPC $^4$: | G 01 N 29/04 |

### Documentation Searched other than Minimum Documentation to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | V.N. Boganik "Metody operativnogo obobschenia promyslovo-geofizicheskoi informatsii", 1983, Nedra (Moscow), pages 109-110 | 1 |
| A | L.I. Pomerants et al. "Promyslovo-geofizicheskaya apparatura i oborudovanie", 1966, Nedra (Moscow), page 134 | 1 |
| A | US, A, 4326417, (The United States of America as represented by the United States Department of Energy), 27 April 1982, see column 3, lines 29-59, figures 1-3 | 1 |
| A | SU, A1, 1188637, (A.L. Dorofeev et al.), see column 2, lines 32-39, column 4 | 1 |

* Special categories of cited documents: [10]

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 May 1987 (27.05.87) | 15 June 1987 (15.07.87) |
| International Searching Authority | Signature of Authorized Officer |
| ISA/SU | |

Form PCT/ISA/210 (second sheet) (January 1985)